# EUROPÄISCHE PATENTANMELDUNG

(11) **EP 1 094 405 A2**
(43) Veröffentlichungstag der Anmeldung: **25.04.2001**
(21) Anmeldenummer: 00250347.2
(22) Anmeldetag: 20.10.2000
(51) Int. Cl.: G06F 17/30

(54) **Verfahren zum Erzeugen einer dynamischen Auswahlmaske für den Abruf von Daten aus einer Datenbank**

(30) Priorität: 21.10.1999 DE 19952630
(71) Anmelder: Aryo GmbH, 57627 Hachenburg (DE); InterNetX GmbH, 93047 Regensburg (DE)
(72) Erfinder: Simon, Pál, Dr., 57627 Hachenburg (DE)
(74) Vertreter: Kietzmann, Manfred

(57) **Zusammenfassung**

Verfahren zum Erzeugen einer Auswahlmaske für den Abruf von Daten aus einer Datenbank mit Hilfe programmierbarer Informationsobjekte.

In bekannten Systemen tastet sich ein Benutzer über menübasierte oder abfragebasierte Suchmaschinen nach Abruf einer Auswahlmaske (Informationsseite, Webseite) über Auswahlelemente (Deskriptoren, Markierungen, Hyperlinks) schrittweise an das zu suchende Dokument heran. Diese Suchmaschinen sind entweder aufwendig und/oder der Benutzer erhält ein Dokument mit viel Ballast.

Demgegenüber verwendet die Erfindung auf der Basis einer individuell einstellbaren Auswahlmaske (dynamische Webseite), die durch den Benutzer im Dialog mit einem Server erstellt wird, dynamische, d.h. nicht fest vorgegebene, individuell einstellbare, intelligente Informationselemente (dynamischer LINK).

## Beschreibung

Die Erfindung betrifft Verfahren zum Erzeugen einer Auswahlmaske für den Abruf von Daten aus einer Datenbank mit Hilfe programmierbarer Informationsobjekte mittels einem Kommunikationsnetzwerk und einem zentralen Server. Insbesondere bezieht sich die Erfindung auf sogenannte Client-Server-Systeme im Internet, wo Informationen aus einer fast unübersehbaren Menge von Datenbanken und Informationspools abrufbar sind.

### [Stand der Technik]

Bekannt sind Datenbankdienste bei denen mittels einer Suchmaske, Deskriptoren, alphanumerischer Zeichen oder anderen Auswahlkriterien mit zusätzlichen zeitlichen und territorialen Einschränkungen und/oder logischen Verknüpfungen dieser Auswahlkriterien miteinander, gezielt redundanzfreie Dokumente gesucht und/oder zusammengestellt werden.

Bei Internetdiensten ist es demgegenüber in vergleichsweise einfacher Weise möglich, auf Bildschirmen von Datenendgeräten Seiten (Informationen, Daten) von über den Internetdienst erreichbaren Rechnern (Server) anzuzeigen. Der Abruf der Seiten erfolgt mittels einem Programm in Form eines Web- bzw. WWW-Browsers (z. B. Internet Explorer von Microsoft oder Navigator von Netscape).

Die so aufgerufenen Seiten können neben Text und Grafiken auch sogenannte Verweise (Hyperlink, LINK) enthalten, die es ermöglichen, durch Anklicken mittels einer Maus zu einer vorgegebenen Seite im Internet zu gelangen, ohne das dabei eine Zieladresse der Seite in Form von alphanumerischen Zeichen einzugeben ist.

Die Verweise (Hyperlink, LINK) bestehen zum Beispiel aus unterstrichenen oder farbig unterlegten Worten (z.B. FIRMA X) oder aus sogenannten Bannern, die üblicherweise die Form. eines rechteckförmigen Fensters haben, das eine Grafik umschließt.

Es ist bekannt, durch Markieren eines Verweises, z.B. durch Doppelklicken mit der Maus, zu einer vorgegebenen Seite im Internet zu gelangen. Beispielsweise führt im Lycos-Suchserver ein Markieren des Hyperlinks 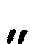 Wissenschaft" zu einer Seite mit mehreren Hyperlinks, unter anderem dem Hyperlink 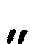 Naturwissenschaften". Wird dieser Hyperlink markiert, wird eine Seite aufgerufen, die mehrere Katalogeinträge enthält, unter anderem den Katalogeintrag 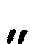 Astronomie.de". Durch dessen Markierung lassen sich Seiten von WWW-Servern aufrufen, die sich mit der Thematik Astronomie befassen.

Durch dieses 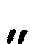 springen" über Verweise von einer Webseite zur nächsten wird das sogenannte 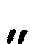 Surfen" im Internet möglich. Das mag zwar für viele Benutzer, wie beim Blättern in einem Lexikon, interessant sein, führt aber nicht schnell zu einem zielgerichteten Ergebnis. Der Einsatz von sogenannten intelligenten 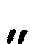 Robotern" oder 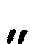 Agenten" entlastet den Benutzer beim Finden von Informationen, verringert aber nicht den Umfang der Datenmenge, die letztendlich übertragen wird.

Es sind auch Verweise in Webseiten bekannt, die durch Einmal-Klicken mit der Maus zur Anzeige einer Zusatzinformation führen. Diese Zusatzinformation enthält Angaben zum Inhalt der abrufbaren Seite bzw. Seitensequenz. Durch Doppel-Klicken mit der Maus wird dann die jeweilige Seite bzw. Seitensequenz abgerufen. Die entsprechende Datenmenge, die zum Computer des Benutzers (Client) übertragen wird, kann vergleichsweise sehr groß sein, so dass entsprechend lange Übertragungszeiten erforderlich sind. Bei langen Übertragungszeiten neigen die Benutzer, die keine Kenntnis über die noch verbleibende Übertragungszeit haben, vielfach dazu, die andauernde Übertragung zu unterbrechen und zu stoppen. Ein weiterer Nachteil zur Übertragung dieser großen Datenmengen besteht darin, dass der Benutzer in vielen Fällen nicht an der Gesamtmenge der übertragenden Datenmengen, sondern nur an einem Teil dieser Daten interessiert ist.

Die wichtigsten Probleme des Internet's resultieren aus der wachsenden Menge an Informationen, die sehr oft ohne Vorinformationen geladen werden. Für den Benutzer gibt es kaum Möglichkeiten, zu ladende Informationen vorher in ihrer Qualität und Quantität zu beurteilen. Es werden oft überflüssige Informationen geladen, die dann aus Zeitmangel in diesem Umfang vom Interner-Benutzer nicht bearbeitet werden können. In der DE 197 23 479 A1 wird ein Verfahren zum Datenaustausch in einem Netzwerk vorgestellt, bei dem mittels einer gezielten Anfrage an den Server, dieser aus einer Menge von Datenbanken ein auf die Suchfrage zugeschnittenes Dokument zusammenstellt.

Der Nachteil dieser Erfindung besteht darin, dass auch hier der suchende Benutzer (Client) an ein Suchschema gebunden ist, das er nicht mehr beeinflussen kann. Die Auswahl der relevanten Daten erfolgt im Server durch ein durch den Client nicht mehr veränderbares, vorgegebenes Programm.

Die Erfindung nach der DE 196 10 637 A1, stellt ein Mittel zur menugeführten Navigation in einem komplexen Datenbestand vor, bei der ein dreidimensionaler Körper als Navigationsmittel auf dem Datenendgerät eines Informationssystems angeordnet ist. Durch diese Menustruktur kann in einer übersichtlichen Art und Weise, zielgerichtet ein bestimmtes Teilgebiet innerhalb eines großen Datenbestandes gefunden und abgerufen werden.

Auch dieses Suchsystem ist an eine vorgegebene Suchmaske gebunden, mit der statt bisher zweidimensional nunmehr dreidimensional ein relevantes Dokument aus einem Datenbestand ausgewählt werden kann.

In Multimediasystemen und insbesondere für individuelle, an unterschiedliche Bedürfnisse angepasste Zusammenstellungen von Informationen sowie deren Abruf aus einer Vielzahl von unterschiedlichen Datenbanken sind die bekannten Suchsysteme nicht ausreichend flexibel und das Suchergebnis ist immer noch mit einer unnötigen Redundanz belastet.

Weiterhin ist unter dem Namen 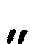 Access" ein Datenbankverwaltungssystem von Microsoft bekannt, mit dem verschiedene Datensätze in SQL-Datenbanksystemen nach dem Client-Server-Prinzip miteinander verknüpft werden können.

Access besitzt eine eigene Programmiersprache und wird nicht vom Internet auf eine Webseite geladen. Vom Durchschnittsnutzer im Internet ist ein solches Abfrageprogramm nach den Möglichkeiten des Standes der Technik umständlich und praktisch nicht anwendbar.

Beispiele einstellbarer Hyperlinks, LINK's für den Abruf von Daten aus einer Datenbank sind aus den Patentanmeldungen des gleichen Anmelders, Aktenzeichen P 199 17 344.3 und P 199 34 092.7, bekannt. Es ist jedoch nicht zu entnehmen, nach welchem Verfahren sie erstellt werden und wie neue Webseiten entstehen.

### [Aufgabe der Erfindung]

Aufgabe der Erfindung ist es, ein Verfahren zum Erzeugen einer Auswahlmaske für den Abruf von Daten aus einer Datenbank mit Hilfe programmierbarer Informationsobjekte insbesondere für den Datenabruf via Internet zu schaffen, mit dem auf die Bedürfnisse von Benutzern abgestimmte Abrufprozeduren in einer relativ einfachen Art und Weise ermöglicht werden können.

Die Aufgabe wird mit den erfindungsgemäßen Merkmalen des 1. Patentanspruchs gelöst. Vorteilhafte Weiterentwicklungen und Ausgestaltungen sind Gegenstand der Unteransprüche.

In bekannten Systemen tastet sich ein Benutzer nach Abruf einer Auswahlmaske (Informationsseite, Webseite) über Auswahlelemente (Deskriptoren, Markierungen, Hyperlinks) schrittweise an das zu suchende Dokument heran.

Jedes Auswahlelement (z.B. LINK) verweist genau auf ein oder mehrere Dokumente, die in einem festen, vorgegebenen Umfang (statisch) in einer Datenbank abgelegt sind. Oder er versucht mit einer mehr oder weniger komplexen Suchfrage ein oder mehrere bestimmte Dokumente zu selektieren. Das Ergebnis bleibt letztendlich immer ein fest vorgegebenes Dokument oder abgegrenzte Untermengen davon (Z. B. suche nur Zusammenfassung oder Seite 3-6).

Demgegenüber verwendet die Erfindung auf der Basis einer individuell einstellbaren Auswahlmaske (dynamische Webseite), die durch den Benutzer im Dialog mit einem Server erstellt wird, dynamische, d.h. nicht fest vorgegebene, individuell einstellbare Auswahlelemente (dynamischer LINK).

Ein dynamischer LINK ist ein lernfähiges, programmierbares Informationsobjekt, das einen Teil eines möglichen Dokumentes repräsentiert, welches je nach Einstellung des dynamischen LINK's erzeugt wird. Mehrere dynamische LINK'S repräsentieren demzufolge ein vollständiges neues Dokument.

Dabei sind mehrere Arten und Anordnungen dynamischer LINK'S denkbar, die für sich allein oder in Kombination zusammengestellt und eingestellt werden:
- Der dynamische LINK nimmt bekannte Einstellungen vor, die auf jedes Dokument zutreffen und in beliebigen Stufen einstellbar sind (z. B. nur wenig Text, viel Text, Text mit wenig Bild, Text mit viel Bild).
- Der dynamische LINK repräsentiert mögliche Einstellungen betreffs einer zu erzeugenden Auswahlmaske (Webseite), die aus einem Speicher geladen und zur Auswahl und Konfiguration auf dem Bildschirm des Datenabruf-Endgerätes (Client) angezeigt werden. Mit der so eingestellten Auswahlmaske (Webseite) wird das gewünschte Dokument zusammengestellt (beispielsweise sucht der Benutzer ausschließlich Musik von einer Medienfirma und hat den LINK vorher auf Musik eingestellt).
- Ein dynamischer LINK, der häufig von einem Benutzer verwendet wird, wird, um nicht ständig neue Einstellungen vornehmen zu müssen, als Standardeinstellung an einer geeigneten Stelle in der Auswahlmaske angezeigt (z. B. die Standardeinstellung eines LINK's wird auf 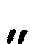 deutsch" eingestellt und alle Dokumente die ausgewählt werden, werden in 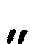 deutsch" erzeugt und dargestellt).

Bevor eine neue Auswahlmaske entsteht und/oder die Daten aus der Datenbank abgerufen werden, tritt der Benutzer (Client) zunächst mit dem Server in ein interaktives Auswahlverhältnis.

Vom Server wird auf Anfrage des Benutzers eine veränderbare Auswahlmaske mit individuell einstellbaren Auswahlelementen (dynamische LINK) bereitgestellt. Diese dynamischen LINK's geben dem Benutzer die Möglichkeit, sich nicht mit einzelnen kompletten Informationsobjekten (z.B. komplett vorliegende statische Webseiten) zu befassen, sondern er stellt im Dialog mit dem Server aus einzelnen Informationsbausteinen auf der Basis von Funktionen, Makros und/oder Ordnungsparameter eine neue, noch nicht vorhandene Auswahlmaske (Webseite) zusammen, mit deren Hilfe er dann gezielt Daten aus einer Vielzahl von weltweit vorliegenden Datenbanken entnehmen kann.

Die einzelnen Informationsbausteine der Auswahlmasken oder Webseiten stellen so veränderbare Programme für die Datenauswahl dar.

Der Server schickt an den Client ein programmierbares mit Informationen versehenes Informationsobjekt. Dieses programmierbare Informationsobjekt enthält bereits eine Auswahl von Parametern, die wählbar und einstellbar sind. Wenn hier noch zuviel oder auch zu wenig einstellbar ist, wird durch mehrfache Interaktion zwischen Server und Client durch Übertragung erneuter programmierbarer Informationsobjekte der Kreis enger gezogen.

Es müssen nicht immer vollständige programmierbare Informationsobjekte zwischen Client und Server ausgetauscht werden, sondern es reicht teilweise auch aus, wenn nur einzelne Parameter oder auch Teilbausteine ausgetauscht und/oder ergänzt werden.

Praktisch sind die Webseiten-Bausteine beispielsweise mit sogenannten Metadaten (Informationen über Informationen) versehen, die in Form von Metatags den einzelnen Bausteinen, getrennt von 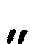 Body"- und 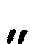 Head"- Angaben, mitgegeben werden. Diese Informationen werden nicht in die dynamisch erstellte Webseite integriert. Dazu kann sehr gut eine Erweiterung des bekannten 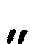 Dublin Core" verwendet werden.

Der 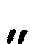 Dublin Core" sieht 15 Elemente vor, die als allgemein verständliche Bezeichner von Metatags verwendet werden können.

Der Benutzer kommuniziert in der Regel (je nach Komplexität der Anfrage) mehrfach mit dem Server bis die Auswahlmaske so programmiert ist, daß der Server aufgrund dieser dynamischen Webseite in dem gewünschten Umfang Informationen aus der Datenbank zieht.

Durch mehrfache Interaktion zwischen Client und Server werden so durch programmierbare, lernfähige Informationsobjekte (dynamische LINK) Ordnungsparameter festgelegt, die dann eine neue Auswahlmaske (Webseite) aus einer Menge von Informationsbausteinen erzeugt.

Der dynamische LINK, der Teil einer kompletten Webseite ist, kann beliebig komplex gestaltet sein. Er kann als ein lernfähiges intelligentes Programm beim Client ankommen und, bevor er an den Server zurückgesandt wird, mit dem Benutzer in Interaktion treten.

Bezogen auf das Internet gibt es keine statischen oder quasistatischen Webseiten mehr, nur eine Ansammlung von Bausteinen, die mögliche Webseiten bestimmen. Die Webseite wird vom Benutzer durch angegebene Parameter eines dynamischen LINK's bestimmt. Die klassische Webseite entspricht in diesem Fall, der Standardeinstellung des dynamischen LINK's, die zuerst vom Server an den Client verschickt wird.

In einer weiteren Ausführung der Erfindung kann der dynamische LINK auch mit Sprache eingestellt werden, wenn z. B. dazu ein Spracherkennungssystem vorgeschaltet ist. Letztendlich ist es egal, wie Informationen eingegeben und an den LINK weitergegeben werden.

Sollte ein Sicherheitsbedürfnis vorliegen, kann die Eingabe auch durch nutzerspezifische Erkennungsmerkmale (Fingerprint, Gesichtserkennung, Sprecherverifikation o.a.) ergänzt werden. Mit dem neuen erfinderischen Verfahren ist es nicht nur möglich, in einfacher Weise redundanzfreie Daten oder Informationen aus einer Datenbank zu ziehen, sondern einem Anwender ist es auch möglich, aus den vorhandenen und veränderbaren Informationsbausteinen eine neue eigene Webseite zusammenzustellen.

### [Beispiele]

An Hand von Zeichnungen werden vorteilhafte Ausführungen der erfindungsgemäßen Lösung näher beschrieben.

Es zeigen:
- **Fig. 1a** bis **1c**: eine schematische Darstellung des Verfahrensablaufes,
- **Fig. 2**: den Aufbau möglicher Auswahlmasken gemäß des Verfahrens in unterschiedlicher Zusammenstellung der Informationsobjekte,
- **Fig. 3**: eine Auswahlmaske mit einem kompletten dynamischen Link,
- **Fig. 4**: die Möglichkeit einer unterschiedlichen Quantisierung eines Informationsobjektes nach Umfang und Zeit.

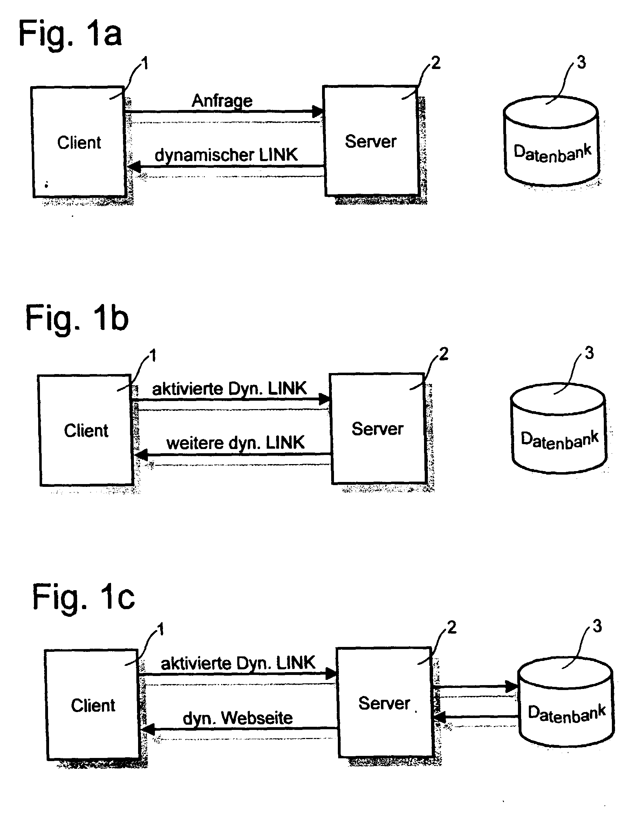

Die Figuren **Fig. 1a** bis **1c** zeigen in einer schematischen Darstellung den Verfahrensablauf, wie er beispielsweise über das Kommunikationssystem Internet ausgeführt ist. In diesem Fall wird das Datenabruf-Endgerät **1** mit seinen Programmen als Client und die zentrale Verarbeitungseinheit **2** als Server bezeichnet. Die Datenbank **3**, auf die gezielt zugegriffen werden soll, ist eine Vielzahl von weltweit angebotenen Datensammlungen, die jeweils aus einer Menge von Informationsbausteinen mit 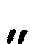 Body"- und 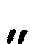 Head"- Angaben bestehen.

Im ersten Verfahrensschritt (**Fig. 1a**) wird von dem Server **2** auf Anfrage vom Client **1** eine Auswahlmaske mit lernfähigen, programmierbaren Informationsobjekten (dynamischer LINK) bereitgestellt.

Im zweiten Verfahrensschritt (**Fig. 1b**) wird der aktivierte dynamische LINK vom Client **1** an den Server **2** zurückgesendet und wenn nötig, was bei komplexen Anfragen in der Regel der Fall ist, von dem Server **2** weitere lernfähige, programmierbare Informationsobjekte (dynamische LINK) angefordert.

Der erste und der zweite Verfahrensschritt kann mehrfach hintereinander ausgeführt werden.

In dem dritten Verfahrensschritt (**Fig. 1c**) wird aus den programmierten Informationsobjekten (dynamische LINK) eine neue Webseite erzeugt, die ein Programm für eine gezielte, den Nutzerbedürfnissen entsprechende Datenauswahl darstellt.

In einem vierten Verfahrensschritt (ebenfalls **Fig. 1c**) wird nach Aktivierung der dynamischen LINK's in der neuen Webseite durch den Client **1** in dem Server **2** ein Programm aktiviert, das in den Datenbanken **3** einen Algorithmus in Gang setzt, der ein neues redundanzfreien Dokument, bestehend aus Daten, die aus der einen oder den mehreren Datenbanken **3** in unterschiedlicher Qualität und Quantität ausgewählt wurden, erstellt und nur dieses neue Dokument an den Client **1** übertragen wird.

Beispielsweise wurde im ersten Verfahrensschritt das Wort 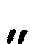 Nachrichten" eingegeben, was im Prinzip schon eine eingegrenzte Anfrage darstellt. Der Server **2** schickt dem Anfragenden (Client) **1** einen dynamischen LINK, der beispielsweise in einer ersten Auswahl folgende einstellbare Parameter, die er bereits kennt, enthalten kann:
seit wann - räumlich - Medientyp - Umfang Der Server **2** kann z. B. noch nicht zwischen Politik und Wirtschaft differenzieren.

Der Anfragende stellt dann (mit Sprache, Tastatur oder egal wie) den LINK ein:
eine Woche - Ausland - Text - ausführlich
   oder
heute - Inland - Film - kurz

Diese Option wird dann an den Server zurückgesendet.

Sollte das ausreichen, braucht der Server **2** keine weiteren dynamischen LINK's mehr an den Client **1** zu verschicken. Also sendet er die Parameter zur Datenbank **3** und holt alle Dokumente, die im 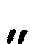 Head" mit
- Datum nicht älter als eine Woche
- Ausland
- Text
- kurz
versehen sind.

Mit diesen Parametern wird dann eine Webseite erstellt. Dieses kann sowohl im Client **1** als auch im Server **2** geschehen.

Es können aber auch noch weitere Optionen gewünscht werden, bevor der LINK an den Server **2** zurückgesendet wird. In diesem Fall werden, z. B. aus einer Textbox, weitere Optionen markiert. Der dynamische LINK wird so ergänzt oder noch weitere dynamische Links angefordert. Z. B. über Politik, Wirtschaft, Autobahnen usw..

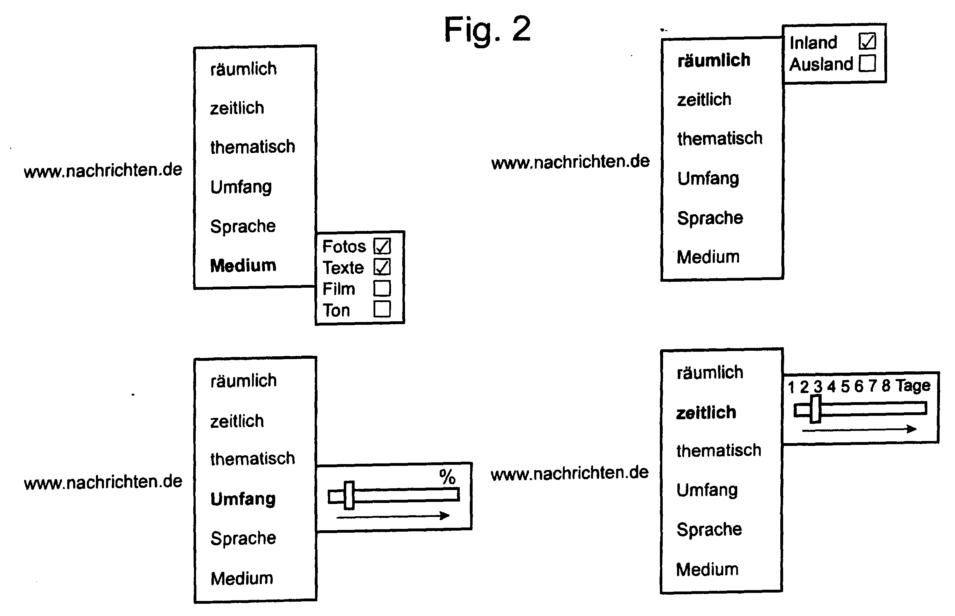

Die Figuren **Fig. 2** bis **Fig. 4** zeigen drei mögliche Ausführungen, wie ein dynamischer LINK aussehen könnte.

Dem Fachmann werden sicherlich bei Kenntnis des Verfahrens weitere Varianten einfallen. Zu beachten ist immer, dass in bestimmten Dimensionen (räumlich, territorial, zeitlich, thematisch, Umfang, Sprache, Multimediale Komponenten usw.) der dynamische LINK parametrisiert werden kann.

In **Fig. 2** ist ein Beispiel eines LINK's gezeigt, wie er mit Windows-Einstellungen vorgenommen werden kann.

Nach Anfrage mit 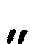 www.nachrichten.de" wird eine Auswahlmaske bereitgestellt in der verschiedene Optionen über den LINK einstellbar sind. Beim Anklicken mit der rechten Maustaste erscheinen verschiedene Auswahlparameter und/oder veränderbare graphische Darstellungen (z. B. Schieber) mit denen quantitativ der LINK einstellbar ist.

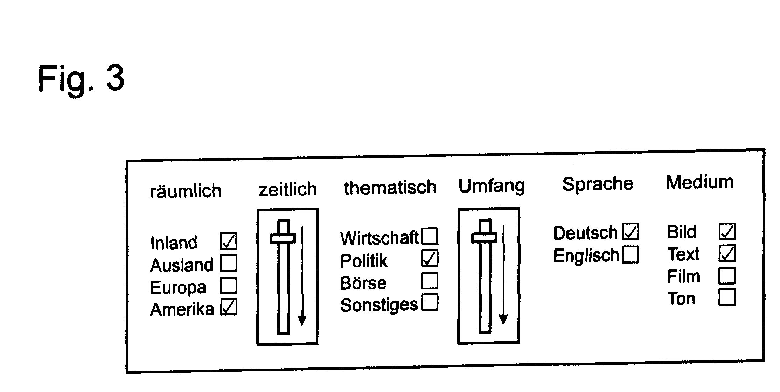

**Fig. 3** zeigt ein Beispiel eines kompletten dynamischen LINK's, wie er auf dem Bildschirm des Datenabruf-Endgerätes (Client) **1** dargestellt werden kann. Dieser wird nach dem Aufruf der Webseite 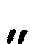 www.nachrichten.de" als erstes geladen und die Einstellungen erfolgen wie in **Fig. 2**.

Die Darstellung nach **Fig. 4** deutet an, dass es möglich ist, einen Parameter nicht nur in einer Dimension, sondern gleichzeitig in zwei Dimensionen zu verändern. Auch eine dreidimensionale Anordnung, wie beispielsweise in der DE 196 10 637 A1 angegeben, ist denkbar.

## Patentansprüche

1. Verfahren zum Erzeugen einer Auswahlmaske zum Abruf von Daten aus einer oder einer Vielzahl von Datenbanken mit Hilfe programmierbarer Informationsobjekte insbesondere zur Verwendung in großen Kommunikationsnetzwerken, wie z.B. Client-Server-Systemen im Internet, bei denen der Abruf von Daten über das elektronische Kommunikationsnetz mit einem Datenabruf-Endgerät, das eine optische Anzeigeeinrichtung, eine Dateneingabeeinrichtung und einen zur Kommunikation über das elektronische Kommunikationsnetz abgestimmten Steuerrechner mit einem zugeordneten Steuerungsprogramm (Client) besitzt, zwischen dem Datenabruf-Endgerät und der einen oder den mehreren Datenbanken eine zentrale Verarbeitungseinheit (Server) zur Verbindung des Datenabruf-Endgerätes mit der einen oder den mehreren ausgewählten Datenbanken, die ebenfalls einen auf das elektronische Kommunikationsnetz abgestimmten Steuerrechner mit einem zugeordneten Steuerungsprogramm enthalten, geschaltet ist und auf der Anzeigeeinrichtung des Datenabruf-Endgerätes Auswahlmasken mit Informationsobjekten angezeigt und auswählbar sind und/oder eine Suchfrage aus vorgegebenen für die Datenbank verständlichen Suchkriterien zusammengestellt wird, wobei diese Informationselemente und/oder Suchkriterien innerhalb der zentralen Verarbeitungseinheit (Server) und/oder in den Steuerrechnern in der einen oder den mehreren Datenbanken vorgegebene Verarbeitungsprogramme zur Erstellung eines redundanzfreien Dokuments auslösen und dieses Dokument über die zentrale Verarbeitungseinheit (Server) an das abrufende Datenabruf-Endgerät übertragen wird,
**dadurch gekennzeichnet, dass**
- im ersten Verfahrensschritt von der zentralen Verarbeitungseinheit (Server) (2) auf Anfrage des Datenabruf-Endgerätes (Client) (1) eine Auswahlmaske mit lernfähigen, programmierbaren Informationsobjekten bereitgestellt wird,
- im zweiten Verfahrensschritt die im Datenabruf-Endgerät (Client) (1) aktivierten und programmierten Informationsobjekte vom Datenabruf-Endgerät (Client) (1) an die zentrale Verarbeitungseinheit (Server) (2) zurückgesendet und von der zentralen Verarbeitungseinheit (Server) (2) weitere lernfähige, programmierbare Informationsobjekte oder Teile von diesen (einstellbare Parameter) angefordert werden,
- der erste und der zweite Verfahrensschritt einmal oder mehrfach hintereinander ablaufen,
- in einem dritten Verfahrensschritt aus den aktivierten und programmierten Informationsobjekten eine neue Auswahlmaske (Webseite) erzeugt wird, die ein Programm für eine gezielte, den Nutzerbedürfnissen entsprechende Datenauswahl darstellt und
- in einem vierten Verfahrensschritt auf Basis der Informationsobjekte in der neuen Auswahlmaske (Webseite) in der zentralen Verarbeitungseinheit (Server) (2) und/oder den Steuerrechnern in den Datenbanken (3) ein Algorithmus für die Erstellung eines neuen redundanzfreien Dokuments, bestehend aus Daten, die aus der einen oder den mehreren Datenbanken (3) in unterschiedlicher Qualität und Quantität ausgewählt wurden, abgerufen werden und nur dieses neue Dokument an das Datenabruf-Endgerät (Client) (1) übertragen wird.

2. Verfahren nach Anspruch 1, **dadurch gekennzeichnet, dass** die lernfähigen, programmierbaren Informationsobjekte im Server (2) abrufbare, vorprogrammierte Informationsbausteine sind, die im Datenabruf-Endgerät (Client) (1) zu einer neuen Auswahlmaske (Webseite) zusammengestellt werden.

3. Verfahren nach Anspruch 1 und 2, **dadurch gekennzeichnet, dass** die Informationsobjekte der Auswahlmaske (Webseite) mit Metatags versehen und die Daten in den Datenbanken (3) mit 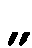 Body"- und 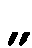 Head"- Angaben ausgerüstet sind.

4. Verfahren nach Anspruch 1, **dadurch gekennzeichnet, dass** die lernfähigen, programmierbaren Informationsobjekte veränderbare dynamische LINK's sind.

5. Verfahren nach Anspruch 1 bis 4, **dadurch gekennzeichnet, dass** die veränderbaren dynamischen LINK'S durch eine Tastatur, eine Maus, Sprache oder andere bekannte Eingabemöglichkeiten eingestellt werden.

6. Verfahren nach Anspruch 4, **dadurch gekennzeichnet, dass** die dynamischen LINK's bekannte Einstellungen vornehmen, die auf jedes Dokument zutreffen und in beliebigen Stufen einstellbar sind.

7. Verfahren nach Anspruch 4, **dadurch gekennzeichnet, dass** die dynamischen LINK's mögliche Einstellungen betreffs einer zu erzeugenden Auswahlmaske (Webseite) repräsentieren, die aus einem Speicher geladen und zur Auswahl und Konfiguration auf dem Bildschirm im Client (1) angezeigt werden und mit der so eingestellten Auswahlmaske (Webseite) das gewünschte Dokument zusammengestellt wird.

8. Verfahren nach Anspruch 4, **dadurch gekennzeichnet, dass** häufig vom Benutzer verwendete dynamischen LINK'S, um nicht ständig neue Einstellungen vornehmen zu müssen, als Standardeinstellungen an einer geeigneten Stelle in der Auswahlmaske angezeigt werden.

9. Auswahlmaske nach Anspruch 1, **dadurch gekennzeichnet, dass** sie aus einem oder mehreren dynamischen LINK's besteht, die ein, zwei oder mehrdimensional einstellbar sind.
